# EUROPÄISCHE PATENTSCHRIFT

(11) **EP 1 373 718 B1**
(45) Veröffentlichungstag und Bekanntmachung des Hinweises auf die Patenterteilung: **08.09.2004**
(21) Anmeldenummer: 02730064.9
(22) Anmeldetag: 26.03.2002
(51) Int. Cl.: F02M 63/02, F16K 17/04

(54) **DRUCKBEGRENZUNGSVENTIL FÜR KRAFTSTOFF-EINSPRITZEINRICHTUNGEN**
PRESSURE LIMITING VALVE FOR FUEL INJECTION DEVICES
SOUPAPE DE LIMITATION DE PRESSION POUR SYSTEMES D'INJECTION DE CARBURANT

(30) Priorität: 27.03.2001 DE 10115162
(43) Veröffentlichungstag der Anmeldung: 02.01.2004
(73) Patentinhaber: L'ORANGE GMBH, D-70435 Stuttgart (DE)
(72) Erfinder: RESSEL, Horst, 71364 Winnenden (DE); SCHEIBE, Wolfgang, 71642 Ludwigsburg-Poppenweiler (DE); LIPPISCH, Michael, 02625 Bautzen (DE); TEUBER, René, 73765 Neuhausen (DE)
(86) Internationale Anmeldenummer: PCT/EP2002/003376
(87) Internationale Veröffentlichungsnummer: WO 2002/077446

(56) Entgegenhaltungen:
- EP-A- 0 887 544
- DE-A- 19 612 412
- US-A- 6 068 022

## Beschreibung

Die Erfindung betrifft ein Druckbegrenzungsventil für Kraftstoff-Einspritzeinrichtungen, insbesondere für als Common-Rail-Systeme ausgebildete Kraftstoff-Einspritzeinrichtungen von Brennkraftmaschinen, gemäß dem Oberbegriff des Anspruches 1.

Druckbegrenzungsventile der vorgenannten Art sind aus der DE 198 22 671 A1 in der Ausgestaltung gemäß Fig. 3 bekannt. Zur drosselnden Durchflussverbindung sind im Übergang vom Druckraum auf den Rücklaufanschluss Drosselelemente in Form von Festdrosseln vorgesehen, die im Kolben angeordnet sind und auf den Rückraum des Kolbens ausmünden, dem die in Richtung auf die Schließlage des Ventilkörpers im Ventilsitz wirkende Rückstellfeder zugeordnet ist, wobei die druckabhängige Verstellung des Kolbens in Gegenrichtung zur Federbelastung anschlagbegrenzt ist. Vermieden werden soll durch eine derartige Ausgestaltung in Verbindung mit Common-Rail-Systemen der Aufbau eines unzulässig hohen Speicherdruckes bei Ausfall der Druckregelung des Systems, und eine daraus resultierende Systemüberlastung. Schwierigkeiten bereitet es schon auf Grund der Anschlagbegrenzung, über das Druckbegrenzungsventil zuverlässig im Überlastungsbereich liegende Speicherdrücke zu vermeiden. Ferner sind insbesondere schwellende Druckverläufe kritisch, bei denen der Ventilkörper zwischen oberer Anschlagbegrenzung und unterer Schließstellung druckabhängig pendelt. Bezogen auf eine vorgegebene Förder- und Verbrauchsmenge, also bezogen auf annähernd stationäre Verhältnisse erscheinen so über die im Kolben im Abströmweg vom Druckraum angeordneten Festdrosseln - bei entsprechender, aber durchaus kritischer Abstimmung - zwar einigermaßen konstante Durchströmungsverhältnisse erreichbar, im praktischen Betrieb besteht aber nach wie vor die Gefahr des sägezahnartigen Öffnens und Schließens des Druckbegrenzungsventils mit entsprechenden Folgen auf dessen Verschleiß und auf das Arbeiten der Brennkraftmaschine, die auf entsprechend schwankende Einspritzdrücke mit einem entsprechend unsteten Lauf reagiert.

In einer Ausgestaltung gemäß Fig. 4 der DE 198 22 671 A 1 versucht man dem dadurch zu begegnen, dass der Kolben als Hohlkolben ausgebildet wird und dass im Hohlraum des Kolbens ein weiteres kolbenartiges Sperrglied angeordnet wird, das in seiner Sperrlage den gedrosselten Überströmweg vom Druckraum auf den Hohlraum absperrt und das seinerseits über Drosselöffnungen mit dem Rücklaufanschluss in Verbindung steht, wobei der Kolben und das in dessen Hohlraum geführte Sperrglied bezogen auf ihre Sperrlage gemeinsam federbeaufschlagt sind. Mit einer derartigen Hintereinanderschaltung von Sperrelementen und diesen zugeordneten, in Richtung auf den Rücklauf durchströmbaren Drosseln lässt sich zwar der insgesamt abzudeckende Druckbereich zwischen oberem Grenzdruck - Ansprechen des Druckbegrenzungsventils - und unterem Grenzdruck - Schließen des Druckbegrenzungsventils - in kleinere, durch den Druckabfall über dem jeweiligen Drosselweg gegebene Druckbereiche unterteilen und damit bezogen auf die Verstetigung der Abströmverhältnisse auch verbessern, dies aber auf Kosten eines verhältnismäßig komplizierten Gesamtaufbaus und einer sehr komplexen Abstimmung.

Aus der DE 198 52 409 A1 ist des Weiteren ein Druckbegrenzungsventil mit einem in Schließrichtung federbelasteten, in einer Bohrung als Schiebeführung laufenden Kolben bekannt, der durch eine dünne Lagernadel gebildet ist, deren Verschiebeweg in der federbelasteten Schließrichtung anschlagbegrenzt ist und die zwischen einem stirnseitigen Anschlag und einem durch einen Ringraum gebildeten Anschlussquerschnitt über eine axiale Dichtstrecke radial dichtend geführt ist. Die Öffnung des eingangsseitigen Hochdruckanschlusses erfolgt, sobald der Kolben in Form der schlanken Ventilnadel druckabhängig entgegen der Federabstützung die axiale Dichtstrecke verlässt. Die druckbeaufschlagten Wirkflächen des Kolbens sind, bei freigegebener wie auch bei geschlossener Durchflussverbindung, gleich, und zur Dämpfung ist dem Kolben federseitig ein Dämpfungsraum zugeordnet, der in Verbindung mit dem Rücklauf steht und in dem ein mit der Ventilnadel verbundener Dämpferkolben liegt. Da die druckbeaufschlagten Wirkflächen des Kolbens auf Grund seiner Ausbildung als über ihre Länge im Durchmesser gleich bleibende Ventilnadel gleich sind, pendelt der Kolben entsprechend den Druckschwankungen und sperrt die Durchflussverbindung ausgehend von einer Öffnungslage, sobald der diesbezügliche Haltedruck unter den Öffnungsdruck absinkt. Es fehlt somit an einem Toleranzfeld um den Öffnungsdruck als Referenzdruck, und die Durchflussverbindung ist bzw. bleibt geschlossen, sobald im Rahmen von Druckschwankungen, denen die Dämpfung entgegenarbeitet, der Öffnungsdruck nicht erreicht bzw. unterschritten wird.

Die vorerwähnt zum Stand der Technik angesprochenen Druckbegrenzungsventile sind somit im Hinblick auf hochdruckseitige Druckschwankungen kritisch und erschweren insbesondere eine Auslegung dahingehend, dass der im Hinblick auf Schädigungen gefährliche, obere Grenzdruck deutlich oberhalb eines Arbeitsdruckes liegt, der einen für alle Betriebsbereiche der Brennkraftmaschine noch akzeptablen Grenzwert darstellt und der über das Druckbegrenzungsventil sichergestellt werden soll.

Dementsprechend liegt der Erfindung die Aufgabe zugrunde, ein Druckbegrenzungsventil der eingangs genannten Art bei einfachem Aufbau dahingehend zu gestalten, dass nach Öffnen bei einem kritischen, oberen Grenzdruck eine Druckabsenkung auf einen gewünschten Wert, insbesondere einen für alle Betriebsbereiche der Brennkraftmaschine akzeptablen Kompromisswert erreicht werden kann, solange hochdruckseitig, bezogen auf diesen Kompromisswert, ein Überschussvolumen gegeben ist.

Gemäß der Erfindung ist hierzu ein Druckbegrenzungsventil nach Anspruch 1 vorgesehen, das sich durch einen sehr einfachen Aufbau auszeichnet, da Kolben und Ventilkörper eine einfach herzustellende Einheit bilden und da, in Verbindung mit der Integration des Anschlussquerschnittes zum Rücklauf in die Schiebeführung für den Kolben, durch diese Schiebeführung und den Kolben auch in einfachster Weise mit erprobten Mitteln die entsprechende Dichtgrenze bei variablem Anschlussquerschnitt geschaffen werden kann. Funktional bildet der Kolben einen Regelkolben, da die Druckbeaufschlagung durch den im Druckraum herrschenden Druck eine Verschiebung entgegen der in Schließrichtung wirkenden Federkraft bewirkt und der Druck im Druckraum vom über den Regelkolben freigegebenen Anschlussquerschnitt zum Rücklauf abhängig ist. Ferner kann durch die in der Schließlage des Ventilkörpers den Anschlussquerschnitt in Schließrichtung überlappende Kolbenlage, ergänzend zur unterschiedlichen Größe der druckbeaufschlagten Wirkflächen, ohne Zusatzaufwand die Höhe der möglichen Druckabsenkung gegenüber einem kritischen, noch zulässigen Höchstdruck ebenso beeinflusst werden wie die Größe des Druckbereiches, bei dessen Verlassen nach unten das Druckbegrenzungsventil schließt, der Ventilkörper also seine Schließlage gegenüber dem Ventilsitz erreicht.

Um auch bei extremen Druckanstiegen im Speichersystem ein Überschwingen der durch Kolben und Ventilkörper gebildeten Einheit in Öffnungsrichtung entgegen der Federkraft zu vermeiden, das die Gefahr eines zu schnellen und großen Druckabbaus im Druckraum mit sich bringen würde und so zum Prellen des Ventilkörpers gegen den Ventilsitz führen könnte, erweist es sich als zweckmäßig, den Öffnungsweg der genannten Einheit aus Kolben und Ventilkörper, und damit auch den Kompressionsweg der diese Einheit in Schließrichtung beaufschlagenden Feder durch einen Anschlag zu begrenzen.

Im Rahmen der Erfindung ist es zweckmäßig, die Einheit aus Kolben und Ventilkörper einstückig herzustellen, und dieser Einheit als Aufnahme eine entsprechende Gehäusebohrung zuzuordnen, die im Bereich des Sitzes des Ventilkörpers in einen eingangsseitigen Hochdruckanschluss übergeht.

In Gegenrichtung ist es zweckmäßig, die Bohrung im Bereich des Ventilkörpers erweitert, insbesondere hinterschnitten auszuführen, so dass sich im Druckraum günstige Durchströmungsverhältnisse aufbauen können, wofür es des Weiteren zweckmäßig ist, den Übergang zwischen Ventilkörper und Kolben als im Durchmesser verringerten Schaft auszugestalten. Die Durchmesser der einander gegenüberliegenden, im Übergang auf den Schaft sich ergebenden, stirnseitigen Ringdurchmesser von Kolben und Ventilkörper sind im Hinblick auf eine Druckentlastung von gleicher Größenordnung, aber insgesamt so gewählt, dass sich bei gegen die Hochdruckseite geöffnetem Druckraum und, entsprechend dem Druckabfall über dem Drosselweg bei Durchströmung des Druckraumes in Richtung auf den Rücklauf eine entgegen der Federkraft wirkende, druckabhängige Stellkraft ergibt, die auch die mit zunehmender Verstellung des Kolbens gegen die Federkraft eintretende Federverhärtung kompensiert.

Die im Übergang vom Schaft auf den Kolben liegende Fläche bildet den stirnseitigen Bereich des Kolbens, der bei geschlossenem Druckbegrenzungsventil in Überdeckung zur Schiebeführung liegt und mit der Schiebeführung die Dichtgrenze im Übergang zwischen Druckraum und vom Kolben übersteuerten Anschlussquerschnitt zum Rücklauf bildet.

Bezogen auf in der Praxis vorkommende Größenordnungen ist zu berücksichtigen, dass für den Ventilkörper auch sehr kleine Durchmesser, bis etwa zu 2 mm, in Frage kommen, bei Durchmessern für den Kolben in der Größenordnung von etwa 4 mm. Daraus resultieren hohe fertigungstechnische Anforderungen, insbesondere auch in Berücksichtigung dessen, dass zur Abstimmung der druckbeaufschlagten Wirkflächen weitere Abstufungen notwendig sind.

In Ausgestaltung der Erfindung erweist es sich deshalb als zweckmäßig, der Einheit von Ventilkörper und Kolben federseitig einen mit dem Druckraum in Verbindung stehenden Dämpfungsraum zuzuordnen, und bezüglich seines Anteils an den druckbeaufschlagten Wirkflächen diesen Dämpfungsraum über den Durchmesser eines axialen Ausgleichszapfens an die Erfordernisse anzupassen. Dadurch ergibt sich die Möglichkeit, insbesondere für den Kolben, aber auch für den Ventilkörper auf größere Durchmesser überzugehen, sowie bei kleinem Querschnitt des Ausgleichszapfens hohe Schließdrücke zu erzielen, so dass ein zu langes Öffnen des Ventiles bei maximalem Hub, bzw. das Freiwerden zu großer Anschlussquerschnitte vermieden wird. Baulich kann bei einer derartigen Ausgestaltung die Feder gegen den Zapfen abgestützt sein.

Weitere Einzelheiten und Merkmale der Erfindung ergeben sich aus den Ansprüchen. Ferner wird die Erfindung nachstehend anhand eines schematisch im Schnitt dargestellten Druckbegrenzungsventils gemäß der Erfindung erläutert, wobei
- Fig. 1: den grundsätzlichen Aufbau eines Druckbegrenzungsventils gemäß der Erfindung zeigt, das in bekannter Weise z. B. in Common-Rail-Systeme integriert sein kann, und
- Fig. 2: eine weitere erfindungsgemäße Ausgestaltung eines solchen Druckbegrenzungsventils mit einer weiteren Lösung zur Realisierung unterschiedlicher Wirkflächen, sowie auch zur Dämpfung.

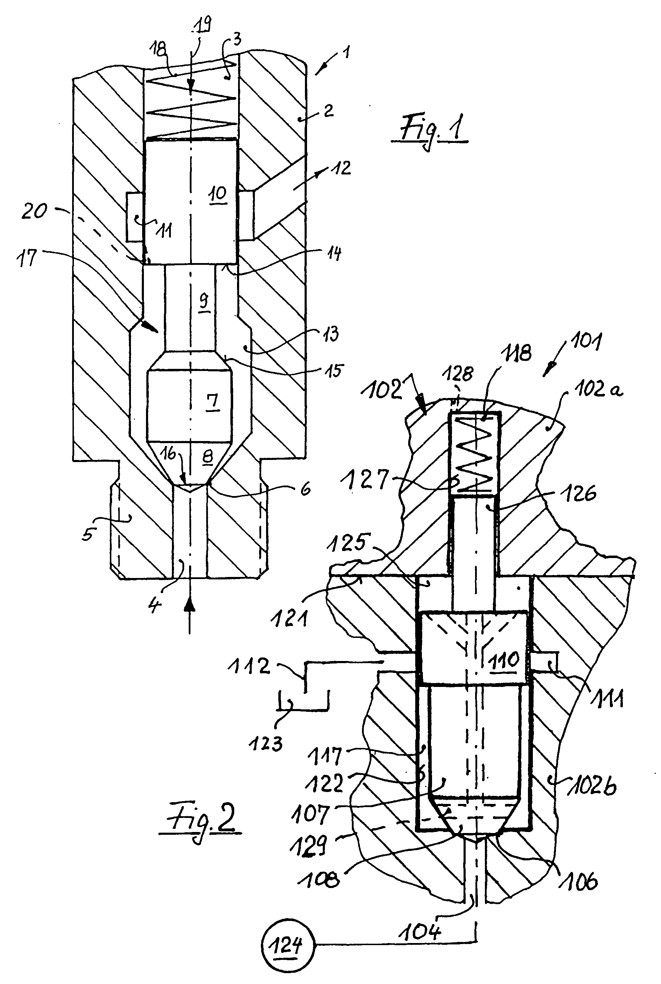

In Fig. 1 ist mit 1 das nur teilweise dargestellte Druckbegrenzungsventil in seiner Gesamtheit bezeichnet, und mit 2 dessen Gehäuse, das abweichend vom Dargestellten auch mehrteilig ausgebildet sein kann und in dem eine zentrale Gehäusebohrung 3 vorgesehen ist. Die Gehäusebohrung 3 läuft koaxial auf den eintrittsseitigen Hochdruckanschluss aus, der durch eine Bohrung 4 gebildet ist, welche den als Schraubstutzen ausgebildeten Anschlussstutzen 5 durchsetzt, über den das Druckbegrenzungsventil 1 z.B. mit dem Druckspeicher verbunden ist.

Im Übergang der Bohrung 4 des eintrittsseitigen Hochdruckanschlusses auf die Gehäusebohrung 3 liegt der Ventilsitz 6, der mit dem Ventilkörper 7 zusammenwirkt, welcher im Ausführungsbeispiel einen dem Ventilsitz 6 zugeordneten Ventilkegel 8 umfasst und welcher in Gegenrichtung in einen Schaft 9 übergeht, der im Durchmesser gegenüber der Gehäusebohrung 3 verjüngt ist und an den ein Kolben 10 anschließt, für den die Bohrung 3 eine Schiebeführung bildet. Der Kolben 10 liegt in Überdeckung zu einem die Gehäusebohrung 3 erweiternden Ringraum 11, der einen vom Kolben 10 übersteuerten Anschlussquerschnitt zum Rücklauf 12 bildet.

Im Ausführungsbeispiel ist der Kolben 10 mit dem im Durchmesser verringerten Schaft 9 und dem Ventilkörper 7 zu einer einstückigen Einheit zusammengefasst. Diese Einheit kann aber auch in anderweitiger Weise gestaltet, so beispielsweise gebaut sein.

Der Ventilkörper 7 liegt innerhalb der Gehäusebohrung 3 in einem im Durchmesser erweiterten Bohrungsbereich 13, wobei dies im Rahmen der Erfindung nicht zwingend ist, aber im Hinblick auf günstige Durchströmungsverhältnisse vorteilhaft sein kann.

Des Weiteren ist es im Rahmen der Erfindung zweckmäßig, wenn von den einander gegenüberliegenden stirnseitigen Ringflächen 14 und 15 des Kolbens 10 und des Ventilkörpers 7 die Ringfläche 14 etwas größer ist als die Ringfläche 15, so dass der maximale Durchmesser des Ventilkörpers 7 kleiner als der Durchmesser der Gehäusebohrung 3 ist und so dass sich, auch unabhängig von den Flächenverhältnisses des Ventilkörpers 7 bzw. des Ventilkegels 8 zur in Überdeckung zum Ventilsitz 6 liegender Fläche 16, bei zum hochdruckseitigen Anschluss offenem Druckraum 17 eine Druckbeaufschlagung der durch Kolben 10, Schaft 9 und Ventilkörper 7 gebildeten Einheit entgegen der Kraft der Feder 18 ergibt, die die genannte Einheit in Schließrichtung (Pfeil 19) belastet.

Durch die Auslegung der Flächenverhältnisse lässt sich sicherstellen, dass die mit der Verschiebung des Ventilkörpers 7 in Öffnungsrichtung entgegen der Federkraft (Pfeil 19) einhergehende Kompression der Feder 18, und die sich dadurch erhöhende Federkraft, kompensiert werden kann, ebenso wie der Druckabfall, der nach Öffnen des Druckraumes 17 gegen den Rücklaufanschluss 12 eintritt.

Es ist somit über entsprechende Auslegung der Flächen in Bezug auf den Federkraftverlauf sowie auf einen hochdruckseitigen Arbeitsdruck, der für den Notbetrieb - Ausfall der Druck- und/oder Mengensteuerung des Common-Rail-Systems - als für alle Betriebsbereiche der Brennkraftmaschine akzeptabler Kompromisswert festgelegt wurde, ein Betrieb der Brennkraftmaschine sichergestellt, der weder zu Schädigungen derselben und ihrer Aggregate führt, noch beispielsweise im Schiffsbetrieb durch unregelmäßigen Lauf der Brennkraftmaschine, als gestörter Betrieb für die Passagiere erkennbar ist. Wird in der Druckkammer 17 ein Druckwert überschritten, der zu dem für den Notbetrieb festgelegten Kompromissdruck korrespondiert, so führt dies zu einem vergrößerten Übertrittsquerschnitt auf den Rücklaufanschluss 12 und zu einer entsprechenden Druckabsenkung. Wird dieser Druck als durch Auslegung vorgegebener Druck unterschritten, so wird der Anschlussquerschnitt zum Rücklauf 12 über den Kolben 10 zunehmend abgesteuert, bis ein unterer Grenzdruck erreicht ist und über die Kraft der Feder 18 das Druckbegrenzungsventil 1 geschlossen wird.

Durch die Festlegung des freien Anschlussquerschnittes zum Rücklauf 12 auf einen mittleren Öffnungsquerschnitt, der dem als Auslegungswert vorgegebenen Kompromisswert entspricht, lässt sich eine ausreichende Bandbreite vorgeben, in der Druck- und/oder Mengenschwankungen abgefangen werden können, wobei insbesondere eine größere Überdeckung zwischen dem Kolben 10 und der Schiebeführung bezogen auf die Schließlage des Ventilkörpers 7 zusätzlichen Spielraum gibt, so dass zwar ein sicheres Schließen des Druckbegrenzungsventil 1 erreicht wird, wenn sich im Common-Rail-System ein entsprechender Druckabfall ergibt, andererseits aber Druckschwankungen im System um den Kompromisswert als Einstellwert kein taktendes Verhalten des Druckbegrenzungsventils zur Folge haben und durch entsprechende Anpassung des Abströmquerschnittes auf den Rücklauf 12 ausgeglichen werden können. Im Hinblick auf dieses Ergebnis kann es auch zweckmäßig sein, im Überdeckungsbereich des Kolbens 10 zur Schiebeführung sich verlaufend gegen den Rücklauf 12 öffnende Querschnittsbereiche in der Schiebeführung vorzusehen, beispielsweise sich keilförmig erweiternde, nutartige Einschnitte 20.

In Fig. 2 ist ein Druckbegrenzungsventil 101 grundsätzlich gleichen Aufbaus gezeigt, es finden aber - bezogen auf Fig. 1 -für gleiche Teile um 100 angehobene Bezugszeichen Verwendung, wobei in Fig. 2 das Gehäuse 102 ein Gehäuseoberteil 102a und ein Gehäuseunterteil 102b aufweist, und diese Gehäuseteile 102a und 102b in einer Teilebene 121 miteinander verbunden sind.

Im Gehäuseunterteil 102b ist eine Axialbohrung 122 mit durchgehend gleichem Durchmesser vorgesehen, auf die die Bohrung 104 des eintrittsseitigen Hochdruckanschlusses ausmündet und in der die durch den Kolben 110 und den Ventilkörper 107 gebildete Einheit liegt, wobei der Ventilkörper 107 in einem Ventilkegel 108 ausläuft, der im Ventilsitz 106 gegen den durch die Bohrung 104 gebildeten Hochdruckanschluss abdichtet. Der Kolben 110 liegt wiederum im Überdeckungsbereich zu einem gehäuseseitigen Ringraum 111, an den der symbolisch auf den Tank 123 ausmündende Rücklauf 112 angeschlossen ist. Die hochdruckseitige Versorgung ist symbolisiert durch die Pumpe 124.

Der Ventilkörper 107 ist im Durchmesser gegenüber dem Kolben 110 etwas zurückgenommen, so dass bei geöffnetem und entgegen der Kraft der Feder 118 axial angehobenem Ventilkörper 107 über den Druckraum 117 die verbleibende Ringfläche zwischen Kolben 110 und Ventilkörper 107 druckbeaufschlagt und nach entsprechendem Verschiebeweg die Verbindung vom hochdruckseitigen, durch die Bohrung 104 gebildeten Anschluss zum Ringraum 111 aufgesteuert wird, wobei der Kolben 110 in seiner der Schließlage des Ventilkörpers 107 zugeordneten Stellung den Anschlussquerschnitt zum Ringraum 111 so weit überlappt, dass die Freigabe des Anschlussquerschnittes gegenüber dem Abheben des Ventilkörpers 107 aus dem Ventilsitz 106 verzögert erfolgt, und zwar erst nach Überschreiten einer konstruktiv vorgegebenen Überlappungsstrecke.

Rückseitig zum Kolben 110 ist ein Dämpfungsraum 125 vorgesehen, der durch einen zwischen dem Kolben 110 und dem Gehäuseoberteil 102a liegenden Abschnitt der Bohrung 122 begrenzt ist, wobei der Dämpfungsraum 125 durch einen Ausgleichszapfen 126 überbrückt ist, der in einer Bohrung 127 des Gehäuseoberteiles 102 gleitdichtend geführt ist und der rückseitig zum Ausgleichszapfen 126 über die Feder 118 beaufschlagt ist. Der Federraum ist mit einem Leckageabfluss 128 versehen.

Der Dämpfungsraum 125 steht mit dem Druckraum 117 über einen Kanalanschluss 129 in Verbindung, der strichliert angedeutet ist, und der Ausgleichszapfen 126 kann als gesondertes Bauteil stirnseitig gegen den Kolben 110 anliegend ausgeführt sein oder auch mit der durch den Kolben 110 und den Ventilkörper 107 gebildeten Einheit zusammengefasst sein.

Infolge der Nutzung des Rückraumes zum Kolben 110 als Dämpfungsraum 125, der mit dem Druckraum 117 verbunden ist, bietet die Ausgestaltungsform gemäß Fig. 2 im Vergleich zu jener gemäß Fig. 1 erweiterte Möglichkeiten zur Festlegung der druckbeaufschlagten Wirkflächen und damit auch zur Auslegung der Feder 118, wobei über die Dämpfungsfunktion die Ventilfunktion, wie sie auch an Hand der Fig. 1 erläutert wurde, zusätzlich verbessert wird.

## Patentansprüche

1. Druckbegrenzungsventil für Kraftstoff-Einspritzeinrichtungen, insbesondere für als Common-Rail-Systeme ausgebildete Kraftstoff-Einspritzeinrichtungen von Brennkraftmaschinen, umfassend ein Gehäuse mit einem eingangsseitigen Hochdruckanschluss (4; 104), einem Rücklaufanschluss (12; 112) und eine zwischen diesen liegende, drosselnde Durchflussverbindung, die eingangsseitig einen Ventilsitz (6; 106) aufweist und in der, in Richtung auf die Schließlage federbelastet und druckabhängig in Öffnungsrichtung verschiebbar, ein mit dem Ventilsitz zusammenwirkender Ventilkörper (7; 107) sowie ein einer dem Ventilsitz in Richtung auf den Rücklauf nachgeordneten Dichtgrenze zugeordneter Kolben (10; 110) einen Druckraum (17; 117) abgrenzen, wobei der Kolben (10; 110) dichtend in einer Schiebeführung laufend zum koaxialen Ventilkörper (7; 107) lagefest angeordnet ist und wobei, bezogen auf Kolben und Ventilkörper als Einheit, bei gegen den Hochdruckanschluss geöffnetem Druckraum (17; 117) die entgegen der Federkraft druckbeaufschlagten Wirkflächen der Einheit größer sind als bei gegen den Hochdruckanschluss (4; 104) abgesperrtem Druckraum (17; 117), **dadurch gekennzeichnet**, die Schiebeführung einen vom Kolben (10; 110) übersteuerten Anschlussquerschnitt (1; 111) aufweist und **dass** der Kolben (10; 110) in der Schließlage des Ventilkörpers (7; 107) den Anschlussquerschnitt (11; 111) in Schließrichtung überlappend überdeckt.

2. Druckbegrenzungsventil nach Anspruch 1, **dadurch gekennzeichnet, dass** die Durchflussverbindung eine Gehäusebohrung (3; 122) umfasst, die auf den Ventilsitz (6; 106) ausläuft und die die Schiebeführung bildet.

3. Druckbegrenzungsventil nach Anspruch 2, **dadurch gekennzeichnet, dass** die Gehäusebohrung (3) im Übergang zwischen dem Ventilsitz (6) und der Schiebeführung einen im Durchmesser erweiterten, dem Druckraum zugehörigen Bereich (13) aufweist.

4. Druckbegrenzungsventil nach einem der vorhergehenden Ansprüche, **dadurch gekennzeichnet, dass** die Verbindung zwischen Ventilkörper (7) und Kolben (10) durch einen Schaft (9) gebildet ist, der im Durchmesser gegen den Durchmesser der Schiebeführung zurückgenommen ist.

5. Druckbegrenzungsventil nach Anspruch 4, **dadurch gekennzeichnet, dass** der Schaft (9) im Durchmesser gegenüber dem Ventilkörper (7) zurückgenommen ist.

6. Druckbegrenzungsventil nach einem der vorhergehenden Ansprüche, **dadurch gekennzeichnet, dass** der vom Kolben (10) übersteuerte Anschlussquerschnitt zum Rücklauf (12) als die Schiebeführung erweiternder Ringraum ausgebildet ist.

7. Druckbegrenzungsventil nach einem der vorhergehenden Ansprüche, **dadurch gekennzeichnet, dass** der Verstellweg der Ventilkörper (7; 107) und Kolben (10; 110) umfassenden Einheit in Öffnungsrichtung (19) anschlagbegrenzt ist.

8. Druckbegrenzungsventil nach einem der vorhergehenden Ansprüche, **dadurch gekennzeichnet, dass** der Einheit von Ventilkörper (107) und Kolben (110) ein mit dem Druckraum (117) in Verbindung stehender Dämpfungsraum (125) federseitig zugeordnet ist.

9. Druckbegrenzungsventil nach Anspruch 8, **dadurch gekennzeichnet, dass** der Einheit von Ventilkörper (107) und Kolben (110) federseitig ein den Dämpfungsraum (125) durchsetzender, die Differenz der druckbeaufschlagten Wirkflächen beeinflussender Ausgleichszapfen (126) zugeordnet ist.

10. Druckbegrenzungsventil nach Anspruch 9, **dadurch gekennzeichnet, dass** der Ausgleichszapfen (126) gegenüberliegend zum Kolben (110) in einer Führungsbohrung (127) dichtend gleitgeführt ist, die die Feder (118) aufnimmt.

## Claims

1. Pressure-limiting valve for fuel injection devices, in particular for fuel injection devices, designed as common-rail systems, of internal combustion engines, comprising a housing with an inlet-side high-pressure connection (4; 104) and a return connection (12; 112), and a throttling through-flow connection which lies between these and has a valve seat (6; 106) on the inlet side and in which, spring-loaded in the direction of the closing position and displaceably in the opening direction as a function of pressure, a valve body (7; 107) cooperating with the valve seat and a piston (10; 110) assigned to a sealing limit following the valve seat in the direction of the return delimit a pressure space (17; 117), the piston (10; 110), running sealingly in a sliding guide, being arranged in a fixed position with respect to the coaxial valve body (7; 107), and, with regard to the piston and the valve body as the unit, the active surfaces of the unit which are pressure-loaded counter to the spring force being greater with the pressure space (17; 117) open towards the high-pressure connection than with the pressure space (17; 117) shut off from the high-pressure connection (4; 104), **characterized in that** the sliding guide has a connection cross section (11; 111) overrun by the piston (10; 110), and **in that**, in the closing position of the valve body (7; 107), the piston (10; 110) covers the connection cross section (11; 111) by overlapping in the closing direction.

2. Pressure-limiting valve according to Claim 1, **characterized in that** the through-flow connection comprises a housing bore (3; 122) which runs out onto the valve seat (6; 106) and which forms the sliding guide.

3. Pressure-limiting valve according to Claim 2, **characterized in that** the housing bore (3) has, at the transition between the valve seat (6) and the sliding guide, a region (13) having a widened diameter and belonging to the pressure space.

4. Pressure-limiting valve according to one of the preceding claims, **characterized in that** the connection between the valve body (7) and the piston (10) is formed by a shank (9) which is reduced in diameter in relation to the diameter of the sliding guide.

5. Pressure-limiting valve according to Claim 4, **characterized in that** the shank (9) is reduced in diameter with respect to the valve body (7).

6. Pressure-limiting valve according to one of the preceding claims, **characterized in that** the connection cross section overrun by the piston (10) is designed towards the return (12) as an annular space widened in the sliding guide.

7. Pressure-limiting valve according to one of the preceding claims, **characterized in that** the adjustment travel of the unit comprising the valve body (7; 107) and the piston (10; 110) is stop-limited in the opening direction (19).

8. Pressure-limiting valve according to one of the preceding claims, **characterized in that** a damping space (125) connected to the pressure space (117) is assigned on the spring side to the unit of the valve body (107) and piston (110).

9. Pressure-limiting valve according to Claim 8, **characterized in that** a compensating pin (126) passing through the damping space (125) and influencing the difference between the pressure-loaded active surfaces is assigned on the spring side to the unit of the valve body (107) and piston (110).

10. Pressure-limiting valve according to Claim 9, **characterized in that** the compensating pin (126) is guided sealingly and slidingly, opposite the piston (110), in a guide bore (127) which receives the spring (118).

## Revendications

1. Soupape de limitation de pression pour équipements d'injection de carburant, en particulier pour les équipements d'injection de carburant de machines thermiques formés en systèmes common-rail, comprenant un boîtier avec un raccord de haute pression (4 ; 104) du côté de l'entrée, un raccord de retour (12 ; 112) et une liaison limitant le passage du flux située entre ceux-ci, présentant un siège de soupape (6 ; 106) du côté de l'entrée et dans laquelle un corps de soupape (7 ; 107) agissant de concert avec le siège de soupape est appliqué par un ressort en direction de la position de fermeture et pouvant coulisser en direction de l'ouverture en fonction de la pression, ainsi qu'un piston (10 ; 110) correspondant à une frontière étanche placé en aval du siège de soupape en direction du retour, délimitent une chambre de pression (17 ; 117), où le piston (10 ; 110) se déplace dans un guidage coulissant en assurant l'étanchéité et est placé dans une position définie par rapport au corps de soupape coaxial (7 ; 107) et où en se référant à l'unité du piston et du corps de soupape, lorsque la chambre de pression (17 ; 117) est ouverte vers le raccord de haute pression, les surfaces actives de l'unité soumises à la pression qui s'oppose à la force du ressort sont plus grandes que lorsque la chambre de pression (17; 117) est fermée vers le raccord de haute pression (4 ; 104), **caractérisé en ce que** le guidage coulissant présente une section transversale de raccordement (11 ; 111) contrôlée par le piston (10 ; 110) et **en ce que** le piston (10 ; 110) recouvre en dépassant la section transversale de raccordement (11 ; 111) dans la direction de fermeture dans la position fermée du corps de soupape (7 ; 107).

2. Soupape de limitation de pression selon la revendication 1, **caractérisée en ce que** la liaison de passage du flux comporte un perçage (3 ; 122) du boîtier qui se termine sur le siège de la soupape (6 ; 106) et qui forme le guidage coulissant.

3. Soupape de limitation de pression selon la revendication 2, **caractérisée en ce que** le perçage (3) du boîtier présente un espace (13) de diamètre élargi appartenant à la chambre de pression à l'endroit de la transition entre le siège de soupape (6) et le guidage coulissant.

4. Soupape de limitation de pression selon une des revendications précédentes, **caractérisée en ce que** la liaison entre le corps de soupape (7) et le piston (10) est constituée par une tige (9) dont le diamètre est réduit par rapport au diamètre du guidage coulissant.

5. Soupape de limitation de pression selon la revendication 4, **caractérisée en ce que** le diamètre de la tige (9) est réduit par rapport au corps de soupape (7).

6. Soupape de limitation de pression selon une des revendications précédentes, **caractérisée en ce que** la section transversale de raccordement vers le retour (12) contrôlée par le piston (10) est formée en espace annulaire élargissant le guidage coulissant.

7. Soupape de limitation de pression selon une des revendications précédentes, **caractérisée en ce que** la plage de réglage de l'unité comportant les corps de soupape (7 ; 107) et les pistons (10 ; 110) est limitée par une butée dans la direction de l'ouverture (19).

8. Soupape de limitation de pression selon une des revendications précédentes, **caractérisée en ce qu'**une chambre d'amortissement (125) reliée à la chambre de pression (117) correspond du côté du ressort à l'unité des corps de soupape (107) et des pistons (110).

9. Soupape de limitation de pression selon la revendication 8, **caractérisée en ce qu'**une broche d'équilibrage (126) traversant la chambre d'amortissement (125) et influençant la différence des surfaces actives soumises à la pression, correspond du côté du ressort à l'unité des corps de soupape (107) et des pistons (110).

10. Soupape de limitation de pression selon la revendication 9, **caractérisée en ce que** la broche d'équilibrage (126) située en face du piston (110) est guidée en glissement de manière à assurer l'étanchéité dans un perçage de guidage (127) qui reçoit le ressort (118).
